# EUROPEAN PATENT APPLICATION

(11) **EP 3 407 613 A1**
(43) Date of publication of application: **28.11.2018**
(21) Application number: 18173570.5
(22) Date of filing: 22.05.2018
(51) Int. Cl.: H04N 21/422, H04N 21/442, H04N 21/466, H04N 21/485

(54) **CONTROL OF DISPLAY DEVICE CONTENT**

(30) Priority: 23.05.2017 US 201762510014 P
(71) Applicant: THOMSON LICENSING, 92130 Issy les Moulineaux (FR)
(72) Inventor: ERIKSSON, Brian, Los Altos, CA California 94022 (US); PUDHIYAVEETIL, Ajith, Los Altos, CA California 94022 (US); SUN, Yifan, Los Altos, CA California 94022 (US); DING, Weicong, Los Altos, CA California 94022 (US); PAN, Shijia, Los Altos, CA California 94022 (US); GHASSEMI, Mohsen, Los Altos, CA California 94022 (US)
(74) Representative: Vidon Brevets & Stratégie

(57) **Abstract**

A method and apparatus are described including receiving sensor data from at least one of a plurality of sensors in a sensor array associated with an environment, detecting a pattern in the received sensor data, determining a profile of at least one user present in the environment from a correlation between the detected pattern and patterns in a first database, determining an action to be performed responsive to the determined age range of the at least one user in the environment to actions associated with the user profile in a second database and performing the determined action on received content.

## Description

### FIELD

The proposed method and apparatus is directed to performing an action on content for a display device based on sensor data.

### BACKGROUND

In multicast and broadcast applications, data is transmitted from a server to multiple receivers over wired and/or wireless networks. A multicast system as used herein is a system in which a server transmits the same data to multiple receivers simultaneously, where the receivers form a subset of all the receivers up to and including each of the receivers. A broadcast system is a system in which a server transmits the same data to each of the receivers simultaneously. That is, a multicast system by definition, can include a broadcast system.

This section is intended to introduce the reader to various aspects of the art, which may be related to embodiments that are described below. This discussion is believed to be helpful in providing the reader with background information to facilitate a better understanding of the various aspects of the disclosure. Accordingly, it should be understood, that these statements are to be read in this light.

Current methods for content processing (e.g. filtering) on family display devices (e.g. TVs, tablets, smart phones) use password protection or other types of digital signatures. These are easily "hacked" by relatively intelligent children, and additionally are a nuisance to adults with poor memories.

It is known to use cameras (including webcams) and microphones for age detection and interaction. The issue is that cameras require direct line-of-sight access to the user, are sensitive to rotation, are sensitive to clothing, and are sensitive to lighting. Cameras (webcams) do not work if the user's back is turned towards the camera (webcam). Camera performance degrades if the user is lying on the couch instead of sitting or standing. Camera (webcam) performance also degrades if the user is, for example, wearing a hat or other articles that conceal all or part of the user's face. Camera (webcam) performance also degrades in low light conditions. That is, using cameras for recognition purposes is not always reliable and recognition performance degrades in at least the situations described above.

Recent technological advances have shown how users can be disambiguated by their gait inferred by sensors (e.g., motion, vibration and/or weight). In addition, other activities a user performs in an environment have a unique signature which can be inferred by sensors (e.g., motion, vibration and/or weight).

### SUMMARY

The proposed method and apparatus processes (filters) content for rendering on a display device based on a user's profile (e.g. age), inferred by sensors (e.g. motion, vibration, weight) placed in the display device (e.g. TV, tablet, smart phone) room. The content processing (filtering) protocol may for example be set by an adult. The proposed method and apparatus in some embodiments can leverages the unique vibration signatures to create new interactions with set-top boxes or network gateway devices using data acquired by a vibration sensor.

According to a first aspect of the disclosure, a method is disclosed for rendering content on a display device including receiving sensor data from at least one of a plurality of sensors associated with an environment including at least one display device; detecting a pattern in said received sensor data; determining a profile of at least one user in the environment based on the detected pattern; determining an action to be performed based on the determined profile of the at least one user and actions associated with the profile; and performing the determined action on content received by the at least one display device.

In another embodiment, the method further includes forwarding the determined action to a content provider; and receiving content from the content provider responsive to the forwarded action.

In another embodiment, the determined action is one of turning off the at least one display device, muting the at least one display device, pausing content on the at least one display device, dimming the at least one display device and selective playback based on determined ages of users.

In another embodiment the received sensor data includes data from at least one of vibration sensors, weight sensors, audio sensors, video sensors and door sensors.

In another embodiment, the vibration sensors are at least one of geophones, gyroscopes and accelerometers.

In another embodiment, the received sensor data is processed to remove any long periods of silence.

In another embodiment, the profile of the at least one user includes an age range.

According to a second aspect of the disclosure, an apparatus is provided having a sensor input module, configured to receive sensor data from at least one of a plurality of sensors associated with an environment including at least one display device; a processor, configured to detect a pattern in the received sensor data; the processor configured to determine a profile of at least one user in the environment based on the detected pattern; the processor configured to determine an action to be performed based on the determined profile of the at least one user and actions associated with the determined profile; and the processor configured to perform the determined action on content received by the at least one display device.

In another embodiment, a communications interface is provided which is configured to forward the determined action to a content provider and to receive content from the content provider responsive to the forwarded action.

In another embodiment, the action is one of turning off the at least one display device, muting the at least one display device, pausing content on the at least one display device and dimming the at least one display device.

In another embodiment, the received sensor data includes data from at least one of vibration sensors, weight sensors, audio sensors, video sensors and door sensors.

In another embodiment, the vibration sensors are at least one of geophones, gyroscopes and accelerometers.

In another embodiment, the received sensor data is processed to remove any long periods of silence.

In another embodiment, the profile of the at least one user includes an age range.

In another embodiment, the apparatus is a set top box or a network gateway device.

Some processes implemented by elements of the disclosure may be computer implemented. Accordingly, such elements may take the form of an entirely hardware embodiment, an entirely software embodiment (including firmware, resident software, microcode, etc.) or an embodiment combining software and hardware aspects that may all generally be referred to herein as "circuit", "module" or "system". Furthermore, such elements may take the form of a computer program product embodied in any tangible medium of expression having computer usable program code embodied in the medium.

Since elements of the disclosure can be implemented in software, the disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid-state memory device and the like. A transient carrier medium may include a signal such as an electrical signal, an optical signal, an acoustic signal, a magnetic signal or an electromagnetic signal, e.g., a microwave or RF signal.

### BRIEF DESCRIPTION OF THE DRAWINGS

The proposed method and apparatus is best understood from the following detailed description when read in conjunction with the accompanying drawings. The drawings include the following figures briefly described below:
Fig. 1 is a block diagram of the components of a device for practicing an embodiment of the proposed method.
Fig. 2 is a block diagram of an exemplary embodiment of a device such as a set top box 200 for practicing the proposed method.
Fig. 3 is a flowchart of an exemplary embodiment of the proposed method.

It should be understood, that the drawing(s) are for purposes of illustrating the concepts of the disclosure and is not necessarily the only possible configuration for illustrating the disclosure.

### DETAILED DESCRIPTION

The description illustrates the principles of the disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and, are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

An implementation of the proposed method and apparatus would be to add a single geophone vibration sensor inside a set-top box or network gateway device. Adding at least one geophone vibration sensor allows for the functionality of the proposed method and apparatus to be realized with no additional hardware or sensor installation by the user.

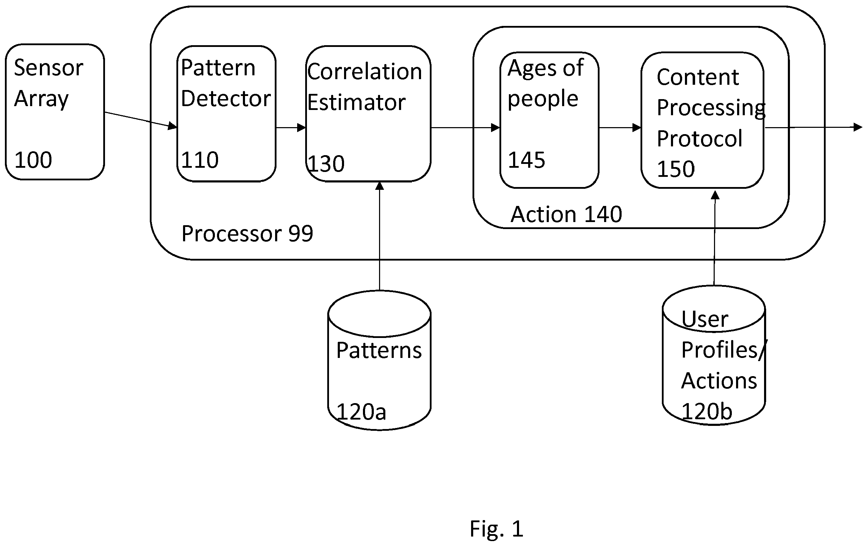

Fig. 1 is a block diagram of the components of a device for practicing the proposed method. The device may be a set top box or a network gateway and may directly connect with content providers such as Netflix, Hulu, M-Go, HBO or any cable, satellite or broadcast content providers.

Sensor array 100 is an array of sensors placed throughout a room having the display device (TV) to determine the profile (age range) of any user (child(ren)) in the proximity of the display device, including weight sensors in the floors and couches, vibration sensors, webcam, audio and door sensors. These are all very inexpensive and easy to install. Sensors are located either in the device or externally. For example, if the only available sensors is a geophone, then the geophone may be inside the device (network gateway, set top box).

Vibration sensors sense movement in the environment. Vibration sensors could be implemented as a geophone, accelerometer, gyroscope, etc. Some basic processing (filtering) may be performed on the sensor data to discard long periods of silence, and the remaining signal is sent to the processor 99.

Processor 99 includes pattern detector 110, correlation estimator 130 and action block 140. Action block 140 further includes ages of people block 145 and content processing protocol module 150. Processor 99 is a centralized unit will use digital signal processing and machine learning techniques to determine the profile (coarse age) of the user (toddler, young child, teenager, adult) based on sensor data. The sensor data is processed to detect patterns and then the patterns are correlated with known patterns in memory (database) 120a. The data (information) is then used to activate a particular content processing (filtering) protocol 150. The age of people module 145 determines the coarse age of the people present in the room having the display device. The coarse age of the people in the room having the display device is used to determine if there is an action to be taken by action block 140 of the device.

Using detected vibrations, the pattern detector module 110 matches the activity to known patterns of interest. This could include a user walking into the room, or a set vibration interaction activity (e.g., stomping three times).

Using the output of block 110 and the known patterns in block 120a, correlation estimator module 130 performs estimations to determine if the current sensed activity matches a known pattern (interaction). This correlation could be calculated by static correlation or time-warping methods. If the correlation is above a set threshold, an action is sent to action block 140. The known patterns may be stored locally in the memory (database) of the device or in cloud storage. The known patterns include vibration patterns for users in the room having the display device. The known patterns could include walking patterns of adults and children, or specific interaction signatures for specific users (a 50 year old male stomping twice).

Action block 140 includes ages of people module 145 and content processing (filtering) protocol module 150. The ages of people module 145 determines the coarse age range of the people in the room with the display device. Content processing (filtering) protocol module 150 prevents a child from attempting to log into an adult account, restricts movie options when a child is surfing, and pauses/dims an age-inappropriate movie when a child enters the room having the display device. Finer-grained content control may also be incorporated, such as temporary restrictions (from punishments) or time-based restrictions (during homework time or after lights out).

Given a high correlation between a current sensed activity and a known pattern in the pattern database 120a and based on the determination of the age of the people in the room having the display device (TV) and an action specified in the user profile/action database 120b, an action is selected by the content processing (filtering) protocol module 150 and performed by processor 99 of the device. For example, if parental controls are invoked, the action may be to turn off the display device (TV), mute the display device (TV), pause/dim content on the display device (TV) and/or selective playback based on determined ages of the users. It should be noted that database 120a and 120b may be two separate databases or a single database with multiple files.

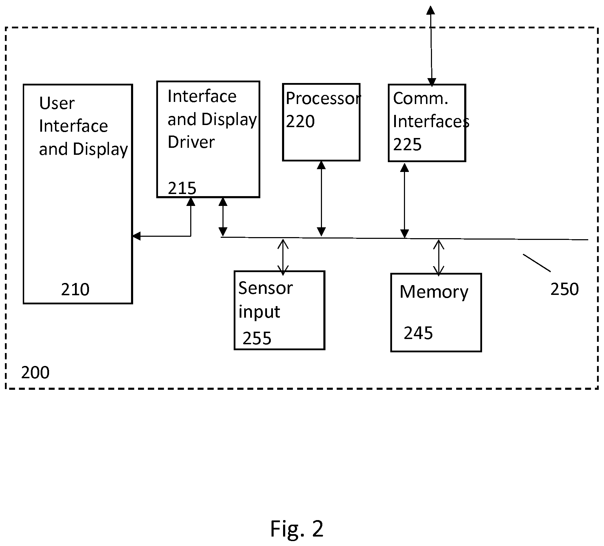

Fig. 2 is a block diagram of an exemplary embodiment of a device 200 such as a set top box or a network gateway for practicing the proposed method. The block diagram configuration includes a bus-oriented configuration 250 interconnecting a processor (processing unit) 220, and a memory 245. The configuration of Fig. 2 also includes a communication interface 225. The communication interface 225 may be wired or wireless and may in fact, include two interfaces - one for wired line communication and one for wireless communication. User interface and display 210 is driven by interface circuit 215.

The device 200 includes a sensor input module 255. The sensor input module 255 is in communication with the remaining components (modules) in the device through the bus 250. Sensor input module 255 receives input from the sensor array, which includes vibration sensors such as geophones, accelerometers and/or gyroscopes. Sensors may also include video sensors (cameras, webcams), audio sensors, weight sensors, motion sensors, door sensors etc. as auxiliary sensors. Such auxiliary sensors are in addition and auxiliary to the vibration sensors. The actual sensors may be in the device (network gateway or set top box) or external to the device.

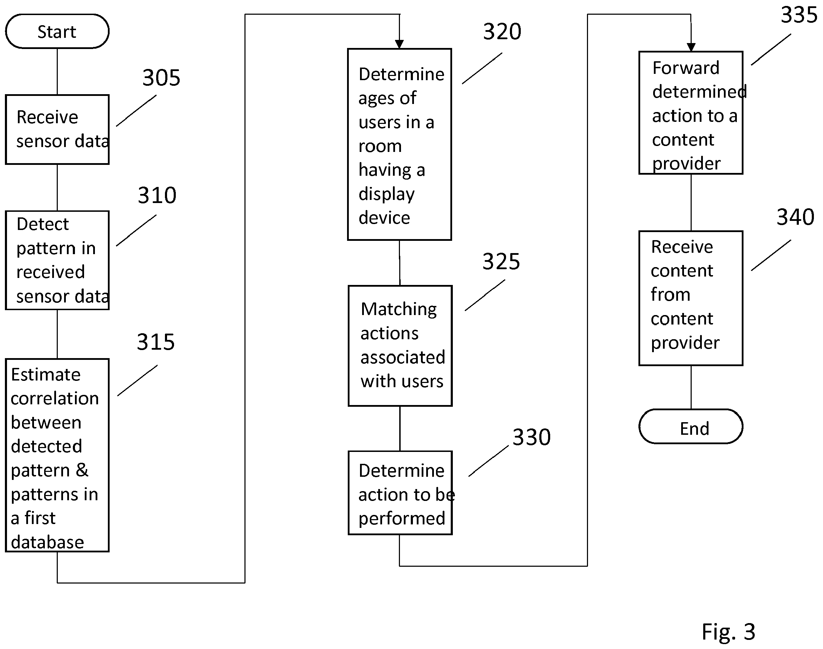

Processor 220 provides computation functions for the device, such as depicted in Figs. 1 and 3. The processor 220 can be any form of CPU or controller that utilizes communications between elements of the alert device to control communication and computation processes. Those of skill in the art recognize that bus 250 provides a communications path between the various elements of embodiment 200 and that other point-to-point interconnection options (e.g. non-bus architecture) are also feasible.

Any or all of the functionality included in the alert device may be embodied as application specific integrated circuits (ASICs), field programmable gate arrays (FPGAs), reduced instruction set computers (RISCs) or any other equivalent separate type of coprocessor integrated into processor 220.

Memory 245 can act as a repository for memory related to any of the methods that incorporate the functionality of the device. Memory 245 can provide the repository for storage of information such as program memory, downloads, uploads, or scratchpad calculations. Those of skill in the art will recognize that memory 245 may be incorporated all or in part of processor 220. Memory may also include the patterns 120a and user profiles/actions 120b. Communication interface 225 has both receiver and transmitter elements for communications especially for communications as known to those of skill in the art. Program instructions for operation of the processor of the device may be in memory 245 or may be in processor 220.

Fig. 3 is a flowchart of an exemplary embodiment of the proposed method. At 305 the sensor data is received from at least one of a plurality of sensors in a sensor array associated with an environment. At 310 a pattern is detected in the received sensor data. At 315 a correlation is estimated between the detected pattern and patterns in a first database. At 320 the profile (ages) of users in the environment, such as a room having a display device, are determined from the correlation between the detected pattern and patterns stored in the first database. At 325 actions associated with users in a second database are matched with the detected pattern. At 330 an action to be performed is determined based on the profiles (ages) of people in the environment (such as the room having the display device) to actions associated with users' profiles (ages) in the second database with the detected pattern. At 335 the determined action is forwarded to a content provider. At 340, content is received from the content provider responsive to the forwarded action.

It should be noted that steps/acts 335 and 340 are optional to the extent that the functionality of steps/acts 335 and 340 may be performed by a set top box or network gateway device. That is, the set top box or network gateway may further process received content based on the action to be performed and then forward the processed content to a display device for rendering.

In the above scenario, processing may include filtering, or if parental controls are invoked, the action may be to turn off the display device (TV), mute the display device (TV) and/or pause/dim content on the display device (TV) or any other appropriate action. Content is received from a content provider, which may be a broadcast content provider, a cable content provider, a satellite content provider, a WiFi content provider or any other entity that provides content (audio, video, multimedia).

The sensor data is received from at least one of a plurality of sensors in a sensor array through communications interface 225 or through sensor input module 255. Processor 220 detects a pattern in the received sensor data. Processor 220 estimates a correlation between the detected pattern and patterns in a first database and determines the profile (ages) of users in an environment, such as a room having a display device.

Processor 220 matches actions associated with users in a second database with the detected pattern and determines an action to be performed based on the profile (ages) of people in the environment (such as the room having the display device) and the matched actions associated with users in the second database with the detected pattern. The set top box or network gateway device processes the received content based on the determined action and forwards the processed content through communications interface 225 to the display device for rendering. In the alternative, communications interface 225 forwards (transmits) the determined action to a content provider and receives content from the content provider responsive to the forwarded action.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random-access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood, that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software-based components.

It is to be further understood, that because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

For purposes of this application and the claims, using the exemplary phrase **"at least one** of A, B **and** C," the phrase means "only A, or only B, or only C, or any combination of A, B and C."

## Claims

1. A method, comprising:
receiving (305) sensor data from at least one of a plurality of sensors associated with an environment including at least one display device;
detecting (310) a pattern in said received sensor data;
determining (320) a profile of at least one user in said environment based on said detected pattern;
determining (330) an action to be performed based on the determined profile of said at least one user and actions associated with said profile; and
performing (335, 340) the determined action on content received by said at least one display device.

2. An apparatus, comprising:
a sensor input module (225), configured to receive sensor data from at least one of a plurality of sensors associated with an environment including at least one display device;
a processor (220), configured to detect a pattern in said received sensor data;
said processor (220) configured to determine a profile of at least one user in said environment based on said detected pattern;
said processor (220) configured to determine an action to be performed based on the determined profile of said at least one user and actions associated with the determined profile; and
said processor (220) configured to perform said determined action on content received by said at least one display device.

3. The method according to claim 1, further comprising:
forwarding (335) said determined action to a content provider; and
receiving (340) content from said content provider responsive to said forwarded action.

4. The apparatus according to claim 2, further comprising:
a communications interface (225) configured to forward said determined action to a content provider and to receive content from said content provider responsive to said forwarded action.

5. The method according to claim 1 or 3, or the apparatus according to claim 2 or
4, wherein said action is one of turning off the at least one display device, muting the at least one display device, pausing content on the at least one display device and dimming the at least one display device.

6. The method according to any one of claims 1, 3 and 5, or the apparatus according to any one of claims 2 and 4-5, wherein said received sensor data includes data from at least one of vibration sensors, weight sensors, audio sensors, video sensors and door sensors.

7. The method or apparatus according to claim 6, wherein said vibration sensors are at least one of geophones, gyroscopes and accelerometers.

8. The method according to any one of claims 1, 3 and 5 to 7, or the apparatus according to any one of claims 2 and 4-7, wherein said received sensor data is processed to remove any long periods of silence.

9. The method according to any one of claims 1, 3 and 5-8, or the apparatus according to any one of claims 2 and 4-8, wherein the profile of the at least one user includes an age range.

10. The apparatus according to any one of claims 2 and 4 to 9, wherein said apparatus is a set top box or a network gateway device.

11. A non-transitory computer readable program product, **characterized in that** it comprises program code instructions for performing the method according to any one of claims 1, 3 and 5 to 9, when said non-transitory software program is executed by a computer.
